# EUROPÄISCHE PATENTSCHRIFT

(11) **EP 1 188 151 B1**
(45) Veröffentlichungstag und Bekanntmachung des Hinweises auf die Patenterteilung: **06.08.2003**
(21) Anmeldenummer: 00935119.8
(22) Anmeldetag: 25.05.2000
(51) Int. Cl.: G07C 9/00

(54) **EINRICHTUNGEN UND VERFAHREN ZUR BIOMETRISCHEN AUTHENTISIERUNG**
DEVICES AND METHODS FOR BIOMETRIC AUTHENTICATION
DISPOSITIFS ET PROCEDE POUR L'AUTHENTIFICATION BIOMETRIQUE

(30) Priorität: 28.05.1999 DE 19924628
(43) Veröffentlichungstag der Anmeldung: 20.03.2002
(73) Patentinhaber: Giesecke & Devrient GmbH, 81677 München (DE)
(72) Erfinder: MÖDL, Albert, D-86368 Gersthofen (DE); STEPHAN, Elmar, D-81371 München (DE); MÜLLER, Robert, D-81673 München (DE)
(74) Vertreter: Klunker . Schmitt-Nilson . Hirsch
(86) Internationale Anmeldenummer: EP0004780
(87) Internationale Veröffentlichungsnummer: WO00074001

(56) Entgegenhaltungen:
- EP-A- 0 399 718
- US-A- 4 827 518
- US-A- 4 993 068
- US-A- 5 869 822

## Beschreibung

Die vorliegende Erfindung betrifft Einrichtungen und ein Verfahren zur biometrischen Authentisierung mittels in einem Speicher eines tragbaren Datenträgers gespeicherten Referenzdaten.

Einrichtungen und Verfahren zur biometrischen Authentisierung sind bekannt und umfassen z. B. die Auswertung von eindeutigen Merkmalen wie Retina, Iris, Sprache, Gesichtszügen, Fingerabdrücken, Unterschriften mit Erfassung der Dynamik beim Unterschreiben usw. Einer weiten Verbreitung der bekannten Verfahren zur biometrischen Authentisierung standen bisher vor allem hohe Preise für die verwendeten Sensoren zur Erfassung der biometrischen Merkmale entgegen. Durch neue Entwicklungen sind aber nunmehr Sensoren, z. B. Fingerabdrucksensoren aus Halbleitermaterialien, verfügbar, die kostengünstige Realisierungen erlauben.

Aus US 4,993,068 ist beispielsweise ein deratiges Identifikationssystem bekannt, bei welchem die Auswertung einer Vielzahl von biometrischen Merkmalen möglich ist.

Ein weiteres System zur Erkennung von Mustern, wie einer Vielzahl von biometrischen Merkmalen, ist aus EP 0 399 718 A1 bekannt. Bei diesem System wird zur Erkennung der Muster ein Netzwerk eingesetzt, das in der Art eines neuronalen Netzwerks aufgebaut ist. Um Daten verschiedener biometrischer Merkmale auswerten und erkennen zu können, werden die Daten der verschiedenen Merkmale entsprechend den Anforderungen des auswertenden Netzwerks angepaßt.

Um biometrischen Authentisierungsverfahren zum endgültigen Durchbruch hinsichtlich größerer Verbreitung zu verhelfen fehlt aber eine standardisierte Erzeugung von Referenzdaten bzw. eine Standardisierung der Referenzdaten für die jeweils zur Authentisierung eingesetzten biometrischen Merkmale. Bisher werden von verschiedenen Anbietern von Verfahren und Einrichtungen zur biometrischen Authentisierung Algorithmen für die Erzeugung der Referenzdaten verwendet, die in der Regel zu untesschiedlichen Referenzdaten führen, welche nicht austauschbar sind. Dadurch bleibt die Einsatzfähigkeit der biometrischen Verfahren auf das jeweilige System des Anbieters beschränkt.

Aufgabe der vorliegenden Erfindung ist es deshalb, Einrichtungen und ein Verfahren zur biometrischen Authentisierung anzugeben, die universell einsetzbar sind und nicht auf ein bestimmtes System beschränkt sind.

Die Aufgabe wird durch die Merkmale der nebengeordneten Ansprüche gelöst.

Bei der Erfindung wird von der Überlegung ausgegangen, daß durch die Speicherung von mehreren Sätzen von biometrischen Referenzdaten die Wahrscheinlichkeit erhöht wird, daß die Auswertung zumindest eines Satzes der gespeicherten biometrischen Referenzdaten ermöglicht wird, wodurch die angestrebte, systemunabhängige Authentifizierung erreicht werden kann. Auf diese Weise ist die gewünschte, umfassende Verbreitung biometrischer Authentifizierung möglich.

In einer weiteren Ausgestaltung der Erfindung ergibt sich der Vorteil, daß durch die Überprüfung mehrerer der gespeicherten Sätze von biometrischen Daten bei der Authentifizierung eine höhere Sicherheit der Authentifizierung gewährleistet wird.

Weitere Vorteile der Erfindung ergeben sich aus der nachfolgenden Beschreibung eines Ausführungsbeispiels anhand von Figuren sowie den abhängigen Ansprüchen.

Es zeigt:
Figur 1 ein System zur Durchführung des erfindungsgemäßen Verfahrens,
Figur 2 einen Bestandteil des in Figur 1 dargestellten Systems.

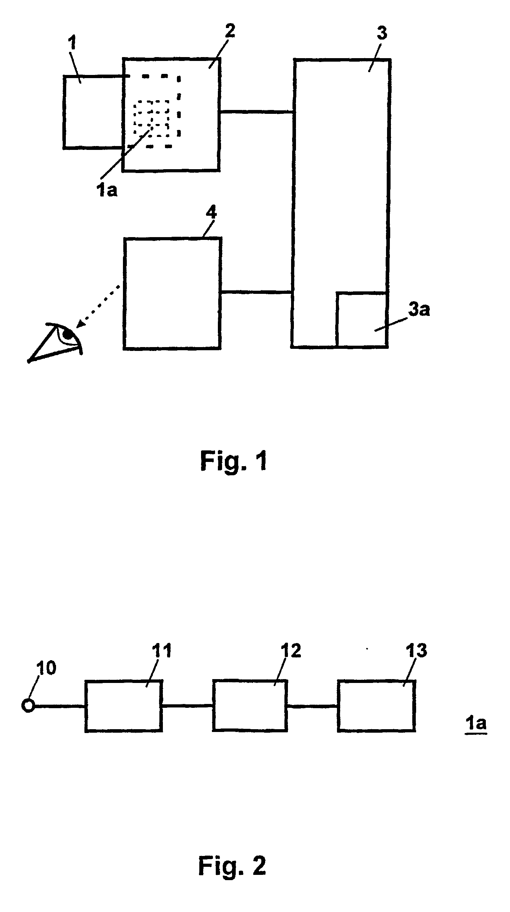

Das in Figur 1 dargestellte System zur biometrischen Authentisierung weist einen tragbaren Datenträger 1 auf, der in eine Ein-/Ausgabeeinheit 2 (E/A-Einheit) eingeführt ist, die mit einer Steuer- und Datenverarbeitungseinheit 3 verbunden ist. An die Steuer- und Datenverarbeitungseinheit 3 ist außerdem ein Sensor 4 zur Erfassung biometrischer Merkmale angeschlossen. Außerdem kann für die Steuer- und Datenverarbeitungseinheit 3 eine Tastatur, eine Anzeige und eine Verbindung zu einem Hintergrunddatensystem, wie eine Telefonverbindung oder ein Netzwerkanschluß, vorgesehen sein. Die letztgenannten Elemente sind in Figur 1 nicht dargestellt, weil sie im Zusammenhang mit dem Verständnis der vorliegenden Erfindung nicht von Bedeutung sind. Die Gesamtheit von E/A-Einheit 2, Datenverarbeitungeinheit 3 und Sensor 4 wird üblicherweise als Terminal bezeichnet. E/A-Einheit 2, Datenverarbeitungseinheit 3 und Sensor 4 können eine bauliche Einheit bilden.

Der Sensor 4 kann beispielsweise, wie dargestellt, biometrische Merkmale des Auges, z. B. der Iris, erfassen. Wie eingangs beschrieben, ist aber auch die Verwendung von Sensoren möglich, die beliebige andere biometrische Daten erfassen. Die Steuer- und Datenverarbeitungseinheit 3 kann beispielsweise von einem Mikrocomputer 3 gebildet werden, der insbesondere über einen Speicher 3a verfügt, der zumindest einen nichtflüchtigen Teilbereich aufweist. Der verwendete Datenträger 1 kann beispielsweise von einer Chipkarte gebildet werden, die über einen Chip 1a mit einem Kontaktfeld verfügt. Abweichend davon kann auch eine kontaktlose Chipkarte 1 mit entsprechend ausgestalteter E/A-Einheit 2 verwendet werden. Über das Kontaktfeld stellt die E/A-Einheit 2 eine Verbindung zu den im Chip 1a der Chipkarte 1 enthaltenen Schaltungsbestandteilen her, die unten näher beschrieben werden. Anstelle einer Chipkarte kann der tragbare Datenträger 1 auch mittels eines optischen, magnetischen oder eines anderen geeigneten Speichermediums bzw. einer Kombination von Speichermedien realisiert werden. In diesem Fall muß die E/A-Einheit 2 entsprechend ausgebildet sein, um die gespeicherten Daten lesen zu können. Zur Vereinfachung der Beschreibung des Systems zur biometrischen Authentisierung wird nachfolgend jedoch beispielhaft von einer Chipkarte als tragbarem Datenträger 1 ausgegangen.

Zur Inbetriebnahme des Systems wird eine Chipkarte 1 in die E/A-Einheit 2 eingeführt und mittels des Sensors 4 werden biometrische Merkmale des Benutzers ermittelt, dem die Chipkarte 1 zugeordnet werden soll. Die Daten der erfaßten biometrischen Merkmale werden mittels der E/A-Einheit 2 zum Mikrocomputer 3 übertragen und dort verarbeitet. Es wird ein Satz von Referenzdaten aus den biometrischen Merkmalen bzw. Daten erzeugt. Die Referenzdaten werden vom Mikrocomputer 3 an die E/A-Einheit 2 übertragen, die auch zum Schreiben von Daten geeignet ist, und von der E/A-Einheit 2 an die Chipkarte 1 übertragen.

Zur Verarbeitung der biometrischen Daten und zur Erzeugung des Satzes von Referenzdaten ist mindestens ein entsprechender Algorithmus, der an sich bekannt ist, im Speicher 3a des Mikrocomputers 3 gespeichert. Um mehrere Sätze von Referenzdaten in der Chipkarte 1 verfügbar zu machen, können mehrere verschiedene Algorithmen zur Erzeugung von Referenzdaten im Mikrocomputer 3 vorhanden sein. Ebenso ist es möglich, daß der Benutzer an verschiedenen Terminals 2, 3, 4, bestehend aus E/A-Einheit 2, Mikrocomputer 3 und Sensor 4, eine Initialisierung vornimmt, bei der aus den vom Sensor 4 erfaßten biometrischen Merkmalen bzw. Daten Referenzdaten mittels verschiedener Algorithmen erzeugt werden. Die verschiedenen Terminals 2, 3, 4 können sich beispielsweise bei verschiedenen Anbietern von Anwendungen für die Chipkarte 1 befinden. Unter Anwendungen sind in diesem Fall Einsatzgebiete der Chipkarte 1 zu verstehen, wie Bankkarte zur Ausführung von Zahlungsvorgängen, Türöffnerkarte für ein Zugangssystem, Schlüsselkarte für ein Verschlüsselungssystem usw. Zur eindeutigen Kennzeichnung der verschiedenen Sätze von Referenzdaten bzw. der sie erzeugenden Algorithmen kann jedem Satz von Referenzdaten eine eindeutige Kennzeichnung hinzugefügt werden, die den zur Erzeugung des Satzes von Referenzdaten verwendeten Algorithmus bezeichnet, beispielsweise in Form eines Headers, der dem Referenzdatensatz vorangestellt wird. In den Header kann beispielsweise der Name desjenigen eingetragen werden, der den verwendeten Algorithmus herstellt bzw. zur Benutzung anbietet.

In Figur 2 ist eine detailliertere Darstellung des Chips 1a der Chipkarte 1 wiedergegeben. Der Chip 1a weist eine Schnittstelle 10 für die in Figur 1 dargestellte E/A-Einheit 2 auf, die beispielsweise kontaktbehaftet oder kontaktlos realisiert sein kann. Derartige kontaktlose oder kontaktbehaftete Chipkarten bzw. E/A-Einheiten sind bekannt. Die Schnittstelle 10 ist mit einer Signalaufbereitungseinheit 11 verbunden, welche die über die Schnittstelle 10 übertragenen Daten sowohl zum Senden als auch Empfangen aufbereitet. Die Signalaufbereitungseinheit 11 ist mit einer Steuereinheit 12 verbunden, die von einem Mikrocomputer gebildet werden kann, an die ein Speicher 13 angeschlossen ist. Zumindest ein Teilbereich des Speichers 12 ist als nichtflüchtiger Speicher ausgebildet.

Wie oben beschrieben, werden die ermittelten Sätze von Referenzdaten mittels der E/A-Einheit 2 zur Chipkarte 1 übertragen. Dabei werden sie über die Schnittstelle 10 und die Signalaufbereitungseinheit 11 an den Mikrocomputer 12 übertragen, welcher sie in im nichtflüchtigen Teil des Speichers 13 vorgesehenen Bereichen speichert. Dabei können die verschiedenen Sätze von Referenzdaten mittels der oben beschriebenen Header gekennzeichnet sein, die ebenfalls im nichtflüchtigen Teilbereich des Speichers 13 gespeichert werden.

Bei Datenaustausch zwischen Chipkarte 1 und Terminal 2, 3, 4 wird üblicherweise die Berechtigung des Datenaustauschs der Chipkarte 1 und/oder des Terminals 2, 3, 4 überprüft. Der Datenaustausch selbst kann in verschlüsselter Form erfolgen. Verfahren sowohl zur Verschlüsselung als auch zur Überprüfung der Berechtigung von Terminal und/oder Chipkarte sind bekannt und brauchen nicht näher beschrieben zu werden, da sie im Zusammenhang mit der vorliegenden Erfindung nicht von Bedeutung sind.

Im Speicher 13 der Chipkarte 1 sind nach der Inbetriebnahme mehrere verschiedene Sätze von Referenzdaten für das ausgewertete biometrische Merkmal, beispielsweise Referenzdaten der Iris des Benutzers der Chipkarte. Will der Benutzer der Chipkarte eine der Anwendungen der Chipkarte aktivieren, führt er seine Chipkarte 1 in die E/A-Einheit 2 eines Terminals 2, 3, 4, das wie das in Figur 1 dargestellte Terminal 2, 3, 4 aufgebaut sein kann und die oben im Zusammenhang mit der Initialisierung der Chipkarte 1 beschriebenen Eigenschaften aufweist. Die vom Sensor 4 des Terminals 2, 3, 4 erfaßten biometrischen Merkmale bzw. Daten werden mittels mindestens eines im Terminal 2, 3, 4 gespeicherten Algorithmus in mindestens einen Satz von Vergleichsdaten umgewandelt. Von der Chipkarte 1 werden die dort im Speicher 13 vorhandenen Sätze von Referenzdaten mittels der E/A-Einheit 2 ausgelesen und mit mindestens einem Satz der Vergleichsdaten verglichen, die aus den vom Sensor 2 erfaßten biometrischen Merkmalen bzw. Daten erzeugt wurden. Wird eine innerhalb des Toleranzbereichs des für den Vergleich verwendeten Algorithmus liegende Übereinstimmung eines im Speicher 13 der Chipkarte 1 gespeicherten Referenzdatensatzes mit mindestens einem im Terminal 2, 3, 4 erzeugten Vergleichsdatensatz festgestellt, erfolgt die Freigabe der Chipkarte 1 für die jeweils gewünschte Anwendung.

Da die unter Umständen nötige Überprüfung aller vorhandenen Sätze von Referenzdaten in Chipkarte 1 mit allen im Terminal 2, 3, 4 zur Verfügung stehenden Sätzen von Vergleichsdaten aufwendig ist, kann von den oben beschriebenen Headern Gebrauch gemacht werden. Dazu wird von der Chipkarte 1 zusammen mit dem biometrischen Referenzdatensatz ein Header übertragen, der kennzeichnet, mit welchem Algorithmus der entsprechende Satz von Referenzdaten erzeugt wurde. Im Terminal 2, 3, 4 wird dann der gleiche Algorithmus zur Erzeugung der Vergleichsdaten aus den biometrischen Daten des Sensors verwendet. Ebenso ist es möglich, daß nach Aufforderung des Terminals 2, 3, 4 ein mittels eines bestimmten Algorithmus erzeugter Satz von Referenzdaten von der Chipkarte 1 zum Terminal 2, 3, 4 übertragen wird. Der entsprechende Algorithmus wird dann auch im Terminal 2, 3, 4 zur Erzeugung der Vergleichsdaten aus den biometrischen Daten des Sensors 4 verwendet. Zur Erleichterung der Benutzung kann es vorgesehen sein, am Terminal 2, 3, 4 und an der Chipkarte 1 Kennzeichnungen anzubringen, welche die jeweils vorhandenen Sätze von Referenzdaten und Vergleichsdaten bzw. Algorithmen bezeichnen. Dadurch ist für den Benutzer sofort ersichtlich, ob ein gekennzeichnetes Terminal zumindest einen auf seiner Chipkarte vorhandenen Satz von Referenzdaten auswerten kann.

Neben dem oben beschriebenen Vergleich der Referenzdaten mit den Vergleichsdaten im Mikrocomputer 3 des Terminals 2, 3, 4, ist es auch möglich, den Vergleich mittels des Mikrocomputers 12 der Chipkarte 1 vorzunehmen.

Zur Steigerung der Sicherheit der verwendeten Überprüfung biometrischer Daten kann es vorgesehen sein, daß mehrere, unterschiedliche Sätze von Referenzdaten und Vergleichsdaten zur Authentisierungsüberprüfung herangezogen werden. D. h., es werden mindestens zwei mittels verschiedener Algorithmen erzeugte Sätze von Referenzdaten und Vergleichsdaten ausgewertet. Dazu werden die im Terminal 2, 3, 4 mittels des Sensors 4 erfaßten biometrischen Daten mittels verschiedener Algorithmen von Mikrocomputer 3 in verschiedene Sätze von Vergleichsdaten umgewandelt und mit den Sätzen von Referenzdaten aus dem Speicher 13 der Chipkarte 1 verglichen. Dabei kann, wie oben beschrieben, eine sequentielle Überprüfung aller im Speicher 13 gespeicherter Referenzdatensätze mit jeweils einem Vergleichsdatensatz erfolgen, bis eine Übereinstimmung mit den zu überprüfenden Sätzen von Referenzdaten ermittelt wird. Mittels der oben beschriebenen Verwendung von Headern kann auch direkt auf die entsprechenden Referenzdatensätze zugegriffen.

In einer Abwandlung ist es möglich, die Authentisierung positiv zu entscheiden, wenn beispielsweise bei drei überprüften Sätzen von Referenzdaten und Vergleichsdaten für zwei Sätze von Referenzdaten und Vergleichsdaten Übereinstimmung festgestellt wurde.

In einer weiteren Abwandlung ist es möglich, daß die unterschiedlichen Sätze von Referenzdaten und Vergleichsdaten aus den Daten unterschiedlicher biometrischer Merkmale, z. B. Iris und Retina oder Fingerabdruck und Iris usw., erzeugt werden. Für diesen Fall müssen entsprechend geeignete Sensoren vorhanden sein. Zusätzlich können auch in diesem Fall unterschiedliche Algorithmen auf die unterschiedlichen biometrischen Daten angewendet werden.

## Patentansprüche

1. Tragbarer Datenträger (1) für eine Authentisierung mittels biometrischer Daten, der einen Speicher (13) aufweist, in dem biometrische Referenzdaten gespeichert sind, wobei mindestens zwei Sätze von Referenzdaten gespeichert sind, **dadurch gekennzeichnet, daß** die verschiedenen Sätze von Referenzdaten mittels verschiedener Algorithmen aus den biometrischen Daten eines biometrischen Merkmals erzeugt werden.

2. Terminal (2,3,4) für eine Authentisierung mittels biometrischer Daten, mit einem Sensor (4) zur Erfassung von biometrischen Merkmalen, einer E/A-Einheit (2) zur Übertragung von Daten, and einer Steuer- und Datenverarbeitungseinheit (3), welche vom Sensor (4) stammende biometrische Daten, die von den erfaßten biometrischen Merkmalen abgeleitet wurden, mittels eines Algorithmus in Vergleichsdaten umwandelt, **dadurch gekennzeichnet, daß** mindestens zwei verschiedene Algorithmen verwendet werden, um die vom Sensor (4) stammenden biometrischen Daten eines biometrischen Merkmals in Vergleichsdaten umzuwandeln.

3. Tragbarer Datenträger (1) und Terminal (2,3,4) nach den Ansprüchen 1 und 2, **dadurch gekennzeichnet, daß** die Referenzdaten mittels der E/A-Einheit (2) vom Datenträger (1) zum Terminal (2,3,4) übertragen werden und die Steuer- und Datenverarbeitungseinheit (3) die Referenzdaten auf Übereinstimmung mit den Vergleichsdaten überprüft.

4. Tragbarer Datenträger (1) und Terminal (2,3,4) nach den Ansprüchen 1 und 2, **dadurch gekennzeichnet, daß** die Vergleichsdaten mittels der E/A-Einheit (2) vom Terminal (2,3,4) zum Datenträger (1) übertragen werden, wobei der Datenträger (1) eine Steuer- und Datenverarbeitungseinheit (12) aufweist, welche die Referenzdaten auf Übereinstimmung mit den Vergleichsdaten überprüft.

5. Tragbarer Datenträger (1) nach Anspruchen 1 oder Anspruch 3 oder 4, **dadurch gekennzeichnet, daß** der tragbare Datenträger (1) eine Chipkarte ist.

6. Tragbarer Datenfräger (1) oder Terminal (2,3,4) nach den Ansprüchen 1 oder 2 oder einem der Ansprüche 3 bis 5, **dadurch gekennzeichnet, daß** die Referenzdatensätze und die zur Erzeugung der Vergleichsdatensätze verwendeten Algorithmen eine sie charakterisierende Kennzeichnung aufweisen, und daß Referenzdaten und Vergleichsdaten mit gleicher Kennzeichnung überprüft werden.

7. Tragbarer Datenträger (1) oder Terminal (2,3,4) nach den Ansprüchen 1 oder 2 oder einem der Ansprüche 3 bis 6, **dadurch gekennzeichnet, daß** es sich bei den biometrischen Merkmalen um Iris, Retina, Gesicht, Sprache, Fingerabdrücke oder um eine Unterschrift sowie die bei der Erstellung der Unterschrift ermittelte Schreibdynamik handelt.

8. Verfahren für die Authentisierung mittels biometrischer Daten, wobei mehrere, mittels verschiedener Algorithmen von den biometrfschen Daten eines biometrischen Merkmals abgeleitete Referenzdaten gespeichert werden,
biometrische Daten erfaßt werden,
die erfaßten biometrischen Daten mittels eines Algorithmus in Vergleichsdaten umgewandelt werden, und
die gespeicherten Referenzdaten mit den umgewandelten Vergleichsdaten für die Authentisierung verglichen werden.

9. Verfahren nach Anspruch 8, **dadurch gekennzeichnet, daß** die erfaßten biometrischen Daten mittels mindestens zwei verschiedener Algorithmen in Vergleichsdaten umgewandlet werden.

10. Verfahren nach Anspruch 8 oder 9, **dadurch gekennzeichnet, daß** die Referenzdaten und/oder Vergleichsdaten bzw. die sie erzeugenden Algorithmen eine Kennzeichnung aufweisen, und daß nur die gespeicherten Referenzdaten mit umgewandelten Vergleichsdaten verglichen werden, die eine gleiche Kennzeichnung aufweisen bzw. nur Vergleichsdaten mittels des Algorithmus aus den erfaßten biometrischen Daten umgewandelt werden, der die gleiche Kennzeichnung aufweist.

11. Verfahren nach einem der Ansprüche 8 bis 10, **dadurch gekennzeichnet, daß** es sich bei den biometrischen Merkmalen um Iris, Retina, Gesicht, Sprache, Fingerabdrücke oder um eine Unterschrift sowie die bei der Erstellung der Unterschrift ermittelte Schreibdynamik handelt.

12. Verfahren nach einem der Ansprüche 8 bis 11, **dadurch gekennzeichnet, daß** zur Authenisierung mehrere, verschiedene Sätze von Referenzdaten mit mehreren verschiedenen Sätzen von Vergleichsdaten verglichen werden.

13. Verfahren nach Anspruch 12, **dadurch gekennzeichnet, daß** zur Umwandlung der verschiedenen Sätze von Referenzdaten und Vergleichsdaten von gleichartigen biometrischen Daten ausgegangen wird, die mittels verschiedener Algorithmen umgewandelt werden.

14. Verfahren nach Anspruch 12, **dadurch gekennzeichnet, daß** zur Umwandlung der verschiedenen Sätze von Referenzdaten und Vergleichsdaten von unterschiedlichen biometrischen Daten ausgegangen wird, die mittels des gleichen oder mittels verschiedener Algorithmen umgewandelt werden.

15. Verfahren nach einem der Ansprüche 12 bis 14, **dadurch gekennzei**chent, daß bei dem Vergleich von mehreren, verschiedenen Sätzen Referenzdaten mit mehreren, verschiedenen Sätzen von Vergleichsdaten die Authentisierung positiv beschieden wird, wenn die MehrZahl der Vergleiche positiv ist.

## Claims

1. A portable data carrier (1) for authentication by means of biometric data having a memory (13) in which biometric reference data are stored, at least two sets of reference data being stored, **characterized in that** the different sets of reference data are generated from the biometric data of a biometric feature by different algorithms.

2. A terminal (2,3,4) for authentication by means of biometric data having a sensor (4) for detecting biometric features, an I/O device (2) for transferring data, and a control and data processing unit (3) which converts biometric data from the sensor (4) which were derived from the detected biometric features into comparative data by an algorithm, **characterized in that** at least two different algorithms are used to convert the biometric data of a biometric feature from the sensor (4) into comparative data.

3. A portable data carrier (1) and a terminal (2,3,4) according to claims 1 and 2, **characterized in that** the reference data are transferred by the I/O device (2) from the data carrier (1) to the terminal (2,3,4), and the control and data processing unit (3) checks the reference data for a match with the comparative data.

4. A portable data carrier (1) and a terminal (2,3,4) according to claims 1 and 2, **characterized in that** the comparative data are transferred by the I/O device (2) from the terminal (2,3,4) to the data carrier (1), the data carrier (1) having a control and data processing unit (12) which checks the reference data for a match with the comparative data.

5. A portable data carrier (1) according to claim 1 or claim 3 or 4, **characterized in that** the portable data carrier (1) is a smart card.

6. A portable data carrier (1) or a terminal (2,3,4) according to claims 1 or 2 or any of claims 3 to 5, **characterized in that** the sets of reference data and the algorithms used for generating the sets of comparative data have a characteristic identification, and reference data and comparative data with the same identification are checked.

7. A portable data carrier (1) or a terminal (2,3,4) according to claims 1 or 2 or any of claims 3 to 6, **characterized in that** the biometric features are iris, retina, face, speech, fingerprints or a signature and the writing dynamics determined during signing.

8. A method for authentication by means of biometric data wherein
several reference data derived from the biometric data of a biometric feature by different algorithms are stored,
biometric data are detected,
the detected biometric data are converted into comparative data by an algorithm, and
the stored reference data are compared with the converted comparative data for authentication.

9. A method according to claim 8, **characterized in that** the detected biometric data are converted into comparative data by at least two different algorithms.

10. A method according to claim 8 or 9, **characterized in that** the reference data and/or comparative data or the algorithms generating them have an identification, and only the stored reference data are compared with converted comparative data which have the same identification or only comparative data are converted from the detected biometric data by the algorithm which has the same identification.

11. A method according to any of claims 8 to 10, **characterized in that** the biometric features are iris, retina, face, speech, fingerprints or a signature and the writing dynamics determined during signing.

12. A method according to any of claims 8 to 11, **characterized in that** several different sets of reference data are compared with several different sets of comparative data for authentication.

13. A method according to claim 12, **characterized in that** the conversion of the different sets of reference data and comparative data starts out from biometric data of the same kind which are converted by different algorithms.

14. A method according to claim 12, **characterized in that** the conversion of the different sets of reference data and comparative data starts out from different biometric data which are converted by the same or by different algorithms.

15. A method according to any of claims 12 to 14, **characterized in that** if a plurality of different sets of reference data are compared with a plurality of different sets of comparative data, authentication is decided positively if the majority of comparisons is positive.

## Revendications

1. Support de données portable (1) pour une authentification au moyen de données biométriques présentant une mémoire (13) dans laquelle sont enregistrées des données biométriques de référence, au minimum deux jeux de données de référence étant enregistrés, **caractérisé en ce que** les différents jeux de données de référence sont générés au moyen de différents algorithmes, à partir des données de référence d'un attribut biométrique.

2. Terminal (2, 3, 4) pour une authentification au moyen de données biométriques, doté d'un capteur (4) servant à la capture d'attributs biométriques, d'une unité d'E/S (2) servant à la transmission des données et d'une unité de traitement des commandes et des données (3), lesquelles données biométriques provenant du capteur (4), qui sont dérivées des attributs biométriques capturés, sont converties en données comparatives au moyen d'un algorithme, **caractérisé en ce qu'**au moins deux algorithmes différents sont utilisés pour la transformation des données biométriques d'un attribut biométrique capturé par le capteur en données comparatives.

3. Support de données portable (1) et terminal (2, 3, 4) selon les revendications 1 et 2, **caractérisés en ce que** les données de référence sont transmises du support de données (1) au terminal (2, 3, 4) au moyen de l'unité d'E/S (2) et que l'unité de traitement des commandes et des données (3) contrôle la concordance des données de référence avec les données comparatives.

4. Support de données portable (1) et terminal (2, 3, 4) selon les revendications 1 et 2, **caractérisés en ce que** les données comparatives sont transmises du terminal (2, 3, 4) au support de données au moyen de l'unité d'E/S (2), le support de données présentant une unité de traitement des commandes et des données qui contrôle la concordance des données de référence avec les données comparatives.

5. Support de données portable (1) selon la revendication 1 ou la revendication 3 ou 4, **caractérisé en ce que** le support de données portable (1) est une carte à puce.

6. Support de données portable (1) ou terminal (2, 3, 4) selon les revendications 1 ou 2 ou une des revendications 3 à 5, **caractérisés en ce que** les jeux de données de référence et les algorithmes utilisés pour la production des jeux de données comparatives possèdent un identifiant qui les **caractérise, et en ce que** les données de référence et les données comparatives sont contrôlées avec le même identifiant.

7. Support de données portable (1) ou terminal (2, 3, 4) selon les revendications 1 ou 2 ou une des revendications 3 à 6, **caractérisés en ce que** les attributs biométriques sont l'iris, la rétine, le visage, la voix, les empreintes digitales ou une signature, ainsi que par la dynamique d'écriture déterminée lors de l'exécution de la signature.

8. Procédé pour l'authentification au moyen de données biométriques, au cours duquel plusieurs données de références dérivées au moyen de différents algorithmes à partir des données biométriques d'un attribut biométrique sont enregistrées,
des données biométriques sont capturées,
les données biométriques capturées sont converties en données comparatives au moyen d'un algorithme et
les données de référence enregistrées sont comparées aux données comparatives converties pour l'authentification.

9. Procédé selon la revendication 8, **caractérisé en ce que** les données biométriques capturées sont converties en données comparatives grâce à au moins deux algorithmes différents.

10. Procédé selon la revendication 8 ou 9, **caractérisé en ce que** les données de référence et/ou les données comparatives et/ou respectivement, les algorithmes qui les génèrent possèdent un identifiant, et **en ce que** seules les données de référence enregistrées sont comparées aux données comparatives converties qui possèdent le même identifiant et que seules les données comparatives sont converties à partir des données biométriques au moyen de l'algorithme correspondant à cet identifiant.

11. Procédé selon une des revendications 8 à 10, **caractérisé en ce que** les attributs biométriques sont l'iris, la rétine, le visage, la voix, les empreintes digitales ou une signature, ainsi que par la dynamique d'écriture déterminée lors de l'exécution de la signature.

12. Procédé selon une des revendications 8 à 11, **caractérisé en ce que** plusieurs jeux de données de référence différents sont comparés à plusieurs jeux de données comparatives différents pour l'authentification.

13. Procédé selon la revendication 12, **caractérisé en ce que** la transformation des différents jeux de données de référence et de données comparatives est réalisée à partir de données biométriques semblables qui sont converties au moyen de différents algorithmes.

14. Procédé selon la revendication 12, **caractérisé en ce que** la transformation des différents jeux de données de référence et de données comparatives est réalisée à partir de données biométriques différentes qui sont converties au moyen d'algorithmes identiques ou différents.

15. Procédé selon l'une des revendications 12 à 14, **caractérisé en ce que** l'authentification est positivement décidée par comparaison de plusieurs jeux différents de données de référence avec plusieurs jeux différents de données de référence, lorsque la pluralité de comparaisons est positive.
